# EUROPEAN PATENT SPECIFICATION

(11) **EP 1 153 757 B1**
(45) Date of publication and mention of the grant of the patent: **11.07.2007**
(21) Application number: 00110333.2
(22) Date of filing: 13.05.2000
(51) Int. Cl.: B41M 5/52, C09D 129/04, C09D 171/02

(54) **High solids interactive coating composition and manufacturing method therefor**
Interaktive Beschichtungszusammensetzung mit hohem Feststoffanteil und Verfahren zur Herstellung dafür
Composition de revêtement interactive à haute teneur en solides et son procédé de fabrication

(43) Date of publication of application: 14.11.2001
(73) Proprietor: Stora Enso North America Corporation, Wisconsin Rapids, Wisconsin 54495-8050 (US)
(72) Inventor: Schliesman, Leonard J., Wisconsin Rapids, WI 54494 (US); Tritz, Leland O., Wisconsin Rapids, WI 54494 (US); Spreda, Karen K., Plover, WI 54467 (US)
(74) Representative: Flosdorff, Jürgen

(56) References cited:
- EP-A- 0 439 153
- EP-A- 1 090 776
- PATENT ABSTRACTS OF JAPAN vol. 1996, no. 07, 31 July 1996 (1996-07-31) & JP 08 072387 A (COPYER CO LTD), 19 March 1996 (1996-03-19)

## Description

### Background of the Invention

This invention relates to coating compositions and ink recording media, especially adapted for ink jet printing, and methods for making the coating composition and recording media.

Ink jet printers employ a plurality of jets connected to a supply of liquid based ink. The jets have small openings and can be energized to emit uniform liquid droplets of ink in a continuous stream upon demand. The jets are controlled to print characters or images on a moving flat surface, usually a sheet of paper.

In order to improve print quality and drying time, many proposals have been made for coatings on paper to improve ink reception. For example, it is well known to coat paper with various absorptive pigments, binders and sizing agents. An aqueous suspension of these agents is applied to a paper or other substrate using conventional coating methods.

An ideal ink receiving coating on paper will allow rapid absorption of the liquid component of the ink, which correlates to a rapid ink drying time, while preventing diffusion of the ink colors into the paper substrate. At the same time, the coating should cause the ink pigment or dye to be fixed on the sheet surface in the form of well defined dots of uniform size and shape. A correct balance of these properties is very difficult to achieve, especially at higher printer resolutions and smaller dot diameters.

While a variety of acceptable coatings can be devised in theory, it is also imperative for the sake of economy that the coatings are capable of being applied uniformly to a base sheet at a high rate of speed using conventional coating equipment. Many of the known absorptive pigments, such as those based on powdered forms of silica, cannot be employed because an excessive amount of binder is required for processing at the solids content necessary to achieve the desired minimum coat weight. The suspensions become too thick or dilatant to allow pumping and uniform application using a conventional paper coater such as a blade coater. If lower binder levels are employed, this may also result in excessive dusting in the finished product.

It is required to produce a finished product with a smooth, uniform finish, free of defects. Scratches, streaks, and other defects are commonly caused by grit in the coating composition. Grit also causes undesirable wear on coating blades and other application equipment. Grit is formed in the coating composition due to agglomeration of pigment particles. The particles tend to agglomerate under various conditions, including the presence of agents which are reactive in some manner with the pigment, such as cationic fixing agents and sizing agents. However, the use of such agents is desirable for overall product quality.

Another condition that tends to increase the occurrence of agglomeration and hence grit is increasing solids concentration in the coating composition. In many prior art formulations, solids concentrations of above 15-25% were often not possible due to unacceptable levels of agglomeration.

In many commercial applications, however, a high solids concentration is needed to produce a finished coat weight of about 7-13 g/m². Coat weights of this magnitude are difficult, and may even be impossible, to achieve using low solids content (15% - 25%) coating compositions with standard coating application equipment.

Low solids concentration coatings also have correspondingly high water contents, resulting in relatively large energy requirements for drying.

For the foregoing reasons, an unfulfilled industry need exists for a high solids, i.e. 30% or greater, coating composition which remains relatively free from grit and which may be applied using standard coating equipment.

EP 0 439 153 A discloses a color ink jet recording method which makes use of a recording medium composed of a liquid absorbing substrate and a surface layer composed of a pigment and a binder, wherein, when dots of two or more inks of different colors are to be superposed at a preselected region on the recording medium, these dots are sequentially formed within a specified time interval, whereby a color image of a high quality is formed with good ink absorption.

EP 1 090 776 A discloses an aqueous coating composition according to the preamble of claim 1. This document is prior art according to Article 54(3) and (4) EPC.

### Objects of the Invention

It is an object of the invention to provide a coating composition and a recording medium adapted for ink jet printing that will rapidly absorb the liquid component of the ink, thereby providing rapid ink drying time.

It is an additional object of the invention to provide an ink jet coating composition and recording medium that is interactive with ink jet dyes to fix the ink on the surface of the sheet without objectionable dye penetration or bleeding.

It is a further object of the invention to provide an ink jet coating composition that has a high solids content, is substantially free of grit, and which may be readily applied to a base sheet with a conventional blade coater.

A final object of the invention is to provide a sequential make down process whereby reactive agents may be added to the composition under conditions that prevent or minimize undesirable reactions with other agents and grit formation.

### Summary of the Invention

A method of making a coating composition for an inkjet recording medium, a method of making an inkjet recording medium, and aqueous coating compositions for inkjet recording sheets are defined by claims 1, 5, 7, and 8 respectively.

The above ink receptive coating is applied to one or both sides of a substrate. The substrate may be optionally precoated with a size solution before the ink receptive coating is applied. The above ink receptive coating comprises an absorptive pigment, a binder, a sizing agent, and a cationic fixing agent. The coating contains a high concentration of solids, above 30% and most preferably in the range 35 - 38%, and is capable of being uniformly applied using standard blade type coating equipment. The ink jet recording medium provided by the invention provides superior ink jet printing quality.

Coatings with pH values of 4.0 to 7.5 have been found to give improved ink holdout over conventional coating compositions having pH values in the range of 8.0 - 9.0. The improved ink holdout results in better color saturation, reduced bleed through, and better overall print quality. Silica gels are preferred pigments. Silica gels with acceptably low pH values and high void volumes desirable for ink absorption are commercially available.

An alternate absorptive pigment is calcined diatomaceous earth. Coating compositions with diatomaceous earth pigments can be made with high solids concentrations, i.e. greater than 30%, and has excellent inkjet printing qualities. Diatomaceous earth has good ink solvent absorptive properties, but produces a coating composition having a pH value that is greater than 7. In addition, recording media with a high concentration of diatomaceous earth has been found to be undesirably abrasive.

The coating composition of the invention includes a polyvinyl alcohol binder. Low molecular weight, partially hydrolyzed polyvinyl alcohol is preferred.

The coating composition of the invention includes a sizing agent. While any of several sizing agents may be used, a preferred sizing agent is a styrene acrylic dispersion for use in combination with silica pigments. If the primary absorptive pigment is calcined diatomaceous earth, the preferred sizing agent comprises an acrylic sizing agent in an aqueous, amphoteric copolymer dispersion based on acrylic acid esters and acrylonitrile.

Cationized pigments hold more dye at the surface than anionic pigments. Accordingly, the coating composition of the invention includes a cationic fixing agent, such as polycationic quaternary ammonium polymer, to cationize the pigment.

The order of addition of materials is critical with regards to the binder, the sizing agent, and the cationic fixing agent. The sizing and cationic agents are interactive. If improperly combined they can agglomerate, cause the formation of grit and rheology problems. It has been discovered that if the polyvinyl alcohol binder (or at least a portion thereof) is mixed with the sizing agent prior to introduction of the cationic fixing agent, compatibility problems are avoided. The polyvinyl alcohol binder can be thought of as protecting the sizing agent against reaction with the cationic fixing agent. Also, the polyvinyl alcohol binder should be at a temperature less than 49°C and preferably at or below 38°C to insure that the sizing agent does not react with the cationic fixing agent and subsequently precipitate out of solution.

Alumina may be added to the coating composition as a whitening agent and to improve rheology. For applications where an FDA approved coating is not required, a fluorescent whitening agent may be added.

The coating of the present invention thus provides a high solids composition that may be uniformly applied to a substrate with conventional blade coaters. The coated inkjet medium of the present invention allows ink jet printing over a wide range of resolution with precise control of dot size (freedom from print mottle), dot size uniformity, and dot shape.

The inkjet media of the invention offers superior resistance to water. Printed sheets will not generally run or distort when splashed with water. This is a distinct advantage over conventional ink jet recording media.

Further objects and advantages of the invention will become apparent from the following detailed description of preferred embodiments.

### Description of Preferred Embodiments

The coating composition of the invention comprises an aqueous suspension of an absorptive pigment, a binder, a sizing agent, and a cationic fixing agent. The formulation of the coating as well as the method of preparation provide a high solids content in addition to freedom from agglomeration and rheology problems, and therefore results in excellent runnability.

The coating composition of the invention is applied to a substrate, for example paper. When an inkjet ink is applied to the coated paper, the absorptive pigment particles absorb the ink solvent (primarily water) leaving the dyes on the surface of the particles. The cationic agent assists in fixing the dye on the surface. This results in rapid dry time and improved ink hold out and color density.

The preferred embodiment of the invention has a pH value of between about 4.5 and 7; most preferentially between 4.5 and 5.5. Although the precise technical effect is not fully known, it is believed that the acidic pH of the coating composition enhances the cationic function. Coatings at these preferred pH values have been found to have improved holdout of the ink jet ink dyes on the paper surface as compared to conventional alkaline coating compositions having pH values of 8.0 to 9.0. The improved holdout results in enhanced color saturation and better overall print quality. It also reduces dye penetration to the opposite side of the sheet.

Tests have been conducted on coating formulations of varying pH values. Coating compositions were prepared in accordance with the invention using pigments and binders selected to result in low pH values. Acid was added to lower pH values. A base, sodium hydroxide, was added to increase pH. It was found that when the pH of the composition is reduced to a value below about 4.0 the composition becomes unstable -- the ingredients become less compatible and viscosity increases with time. As the pH is increased above about 5.5, to beyond a pH value of 7.5, the dispersion becomes similarly unstable, the viscosity of the composition becoming undesirably high. Accordingly, it has been found that a pH value in the range of about 4.5 to about 5.5 is most preferable.

The preferred silica type pigments are well suited for ink jet printing due to their high absorption properties. When evaluating the characteristics of voids in silica pigments, it is important to distinguish between primary particles, secondary or agglomerated particles and associated voids. The primary particles of some silicas agglomerate, that is, groups of primary particles cluster to form secondary particles. Other silicas lack agglomerates. Further, the structure of the primary particle may vary depending on the manufacturing process. Precipitated and gel processes produce porous primary particles, while the fumed silica process produces relatively small, glassy, non-porous particles. As a result, different void structures are created. Depending on the nature of the silica, there may be voids between secondary particles, voids between primary particles within the secondary particle structure, and voids within the primary particle. For purposes of the present application, the term "absorptive silica" means a silica where the primary particles are porous and capable of absorbing water. Also for the purposes of this application, the term "non-agglomerated" refers to a silica substantially free from agglomerates, i.e., the primary particles do not exhibit a tendency to cluster into secondary particles. Gel silicas are preferred as non-agglomerated, absorptive silicas, but some precipitated and hybrid silicas may also be non-agglomerated and absorptive. Generally, fumed silicas agglomerate and are not absorptive. For a further discussion of the properties of silica minerals see Withiam, Michael C., Silica Pigments for Ink Jet Printing, article presented at 1996 TAPPI Coating Conference, Nashville, Tennessee, May 21, 1996. Precipitated silicas, calcium silicates, and diatomaceous earth also have good absorption capabilities, but aqueous dispersions thereof have pH values that normally range 7.0 to 9.5.

Silica gels are the preferred form of silica to be used as the pigment. When dispersed, silica gels have pH values ranging from 3.5 to 11.0, but many are in the 4.5 to 5.5 range. The physical properties of commercially available silica gels are as follows:

| | |
|---|---|
| Surface Area | 150 - 900 m²/g |
| Pore Volume | 0.4 - 2.2 cm³/g |
| Oil Absorption | 35 - 300 g/ 100g (35 - 300%) |
| pH | 3.5-11.5 |
| Average Particle Size | 2 - 17 µm |

Ink jet print quality and coating rheology require a special set of properties. Silicas with high surface areas, above 400 m²/g, are desiccants. Desiccants are unacceptable because they absorb moisture from the air thereby reducing ink absorptive capacity. Silica gels with low pore volumes, less than 0.5 cm³/g, are undesirable, as they exhibit insufficient water absorption capacity. High pore volumes are desirable for water absorption capacity, but volumes above about 2.0 cm³/g give excessively high coating viscosity's. Also, larger particle sizes are preferred for having high pore volume, but particle sizes greater than 16 µm can give poor coating rheology. Thus, the preferred properties of the silica pigment in the coating composition of the invention are as follows:

| | |
|---|---|
| Surface Area | 340 m²/g |
| Pore Volume | 1.2 cm³/g |
| Oil Absorption | 180 g/100 g (180%) |
| pH | 4.5-5.5 |
| Particle Size | 10-12 µm |

Pigments meeting these criteria include Syloid 620 and Sylojet P612 from Grace Davison, W.R. Grace & Co., Connecticut. Sylojet P612 is preferred as it has no particles of diameter greater than 25µ which may cause scratches in the coating layer.

An alternate absorption pigment is diatomaceous earth, in particular, flux calcined diatomaceous earth having an average particle size in the approximate range of 2-10 µm and an oil absorption of 100 - 200% by weight. Calcined diatomaceous earth should be distinguished from other forms of diatomaceous earth which have not been calcined. Most other forms will not allow for a sufficient coat weight or thickness to be applied, and generally do not offer the brightness of calcined diatomaceous earth. It has also been found that the calcined diatomaceous earth pigment has sufficient absorptive capacity in the resulting coating. An advantage of diatomaceous earth is that coating compositions with high levels of this pigment require only a low level of binder to hold it in aqueous suspension. Preferably, the amount of binder will not exceed 31% by weight of the pigment, since high binder levels reduce maximum coat weight and interfere with ink drying time. The composition provides a generally grit free coating composition with high solids concentration of greater than 30% and excellent ink jet printing performance. However, the coated substrate is likely to be undesirably abrasive.

Polyvinyl alcohol (PVOH) is an acceptable binder for the coating formulation of the invention. Starches and latex's are also suitable binders and could provide satisfactory strength. Latex binders may be advantageously used in combination with polyvinyl alcohol. Most latex binders are incompatible with cationic fixing agents, however. Accordingly, if a cationic fixing agent is used, one must select a compatible latex. Also, many starches have lower binding strength than PVOH and would require excessive levels of use.

Many polyvinyl alcohol's can be used, including low and medium molecular weight, partially and fully hydrolyzed. Fully hydrolyzed products are too water insoluble, give long ink dry times, and unstable viscosities. Medium molecular weight products give excessive viscosities and poor rheology. Thus, the preferred polyvinyl alcohol's are low molecular weight, partially hydrolyzed. One such product is Airvol 805 from Air Products and Chemicals, Inc., Allentown, Pennsylvania.

While any of several sizing agents may be used, the preferred sizing agent for combination with silica pigment is of a styrene acrylic dispersion type. An example of such material is Chromaset^{™} 600 Surface Sizing Treatment from Hercules, Inc., Wilmington, Delaware. A similar suitable sizing agent of the styrene acrylic dispersion variety is UniQ-Print® 8000 from Sequa Chemicals, Inc. Styrene butadiene latex type sizing agents may also prove useful. Since these latex agents may introduce compatibility problems with some of the other formulation components, however, the styrene acrylic dispersion agents are preferred. The amount of the sizing agent used has a direct influence on the diameter of the dots which are printed by a given printer at a fixed resolution.

The preferred sizing agent used in combination with diatomaceous earth pigment comprises an acrylic sizing agent, such as Basoplast 355-D from BASF, in an aqueous, amphoteric copolymer dispersion based on acrylic acid esters and acrylonitrile. Alternatively, the sizing agent for use in combination with diatomaceous earth may comprise an alkyl ketene dimer at 0.5 to 5% blended with an acrylic latex at 5 to 15% or other sizing agents such as styrene maleic anhydrides.

It has been found that cationized pigments hold more dye at the surface than anionic pigments. Also, cationic fixing agents are more effective at low pH conditions than they are at alkaline pH values. The type of cationic fixing agent used is not critical as long as it is compatible with the other coating ingredients. The fixing agent must be effective at concentrating the dyes at the coated surface, provide satisfactory runnability on a blade coater, and not adversely affect brightness. Suitable fixing agents include acrylamide acrylic polymers and their derivatives, polyamines and their derivatives, polyethylene oxide, and allylamine polymers. Preferably, the cationic fixing agent is a water soluble polymer having a high percentage of cationic groups such as tertiary amino or quaternary ammonium cationic groups. Water soluble polycationic quaternary ammonium polymer (polydimethyldiallyl- ammonium chloride) is preferred in combination with silica pigment because the level of the agent may be varied substantially without flocculating the other coating ingredients. An example of this product is Lectrapel, marketed by Calgon Corporation, Water Management Division, Pittsburgh, Pennsylvania (More currently known as Conductive Polymer 261LV marketed by ECCI International). The cationic fixing agent is added in an amount of from about 4 to about 10 bone dry parts by weight per 100 parts of pigment.

The order of addition of materials is critical with regards to the binder, the sizing agent, and the cationic fixing agent. The polyvinyl alcohol binder acts as a protective colloid of the sizing agent against reaction with the cationic fixing agent. By protecting the sizing agent against such unwanted reactions, agglomeration and hence grit is prevented from occurring in the coating composition. Thus, desirable benefits are achieved by mixing the polyvinyl alcohol binder (or at least a portion thereof) with the sizing agent prior to introduction of the cationic fixing agent. Also, the polyvinyl alcohol binder should be at a temperature below 49° C and preferably at or below 38° C to insure that the sizing agent does not react with the cationic fixing agent. If the binder temperature is above 120° F it has been found that the sizing agent will precipitate out of solution when the cationic agent is added.

A bright coating and one that is FDA approved for food packaging uses is desirable. Fluorescent whitening agents cannot be used for food packaging applications because they are not FDA approved. Alumina pigments are FDA approved, and are well suited whitening agents for the coating formulation of the invention. For the purposes of this application, the term "alumina" is used broadly to include aluminum oxide [Al₂O₃], aluminum trihydrate [Al(OH)₃] and other conventional aluminum containing pigments. These pigments also provide some alkalinity, which is desirable for use with alkaline-stabilized ink jet dyes. Alumina pigments can be stable at both cationic and low pH conditions. Several pigments would work in the formulation, but a dry alumina that can be added directly to the coating formulation of the invention and readily dispersed in it is preferred. One such product is Martifin OL-107 marketed by Martinswerk GmbH, Bergheim, Germany. The Martifin pigment readily disperses in the coating and is compatible with the other coating ingredients. The Martifin pigment, while increasing coating solids, improves rheology at the same time. Thus, inclusion of this pigment allows application by blade coater and achieves desirable coat weights of approximately 13 g/m² at 35% solids. This pigment also provides an acceptable brightness of 87 in a coating without fluorescent whitening agents.

For grades not requiring FDA approval, it is desirable to add a fluorescent whitening agent to the coating to increase the whiteness, brightness and blue color. While most fluorescent whitening agents would work to a certain degree, they must be stable in acid conditions and must be tolerant of the cationic coating to give optimum results. Most fluorescent whitening agents do not fall into this category. Two products, however, that do are from the Stilbene-Triazine derivatives family. Products of this type are Ciba-Geigy's Tinopal HST and SCP liquids, available from Ciba-Geigy, Paper Dyes and Chemicals, Greensboro, North Carolina.

To achieve the desired coating properties and ink jet quality the preferred low pH, silica gel pigment coating composition with sizing agent is preferably made down with the following order of addition while undergoing continuous high shear mixing:

| Bone Dry Weight | Material | Wet Weight |
|---|---|---|
| | Water | 35.7 |
| 30 | Polyvinyl alcohol @ 15% solids | 200.0 |
| 5 | Sizing Agent @ 47% solids | 10.6 |
| 10 | Cationic fixing agent @ 40% solids | 25.0 |
| 25 | Alumina @ 100% solids | 25.0 |
| 75 | Silica pigment @ 97% solids | 77.0 |
| 10 | Polyvinyl alcohol @ 15% solids | 67.0 |
| 2¹ | Fluorescent whitening agent | 2.0 |

| | | |
|---|---|---|
| 1 For the fluorescent whitening agent, the two parts listed are parts in liquid form as received from the supplier. | | |

Polyvinyl alcohol (PVOH) is the desired binder and must first be dispersed in water before beginning the make-down process. Preferably, the polyvinyl alcohol is cooked at 15% solids in water for 30 minutes at 95° C. This cooking process completely disperses the polyvinyl alcohol in the water. The PVOH/water dispersion is then cooled below 49° C and preferably to 38°C or less.

Next, a sizing agent at about 47% solids is added to the polyvinyl alcohol solution in a make-down vessel. As mentioned above, it is critical that at least a portion of the polyvinyl alcohol binder and the sizing agent be mixed together before introduction of the cationic fixing agent. The polyvinyl alcohol binder acts as a colloid protector of the sizing agent and will prevent unwanted reactions from occurring between the sizing agent and the cationic fixing agent. Without this protective action, the cationically charged fixing agent would tend to attract sizing agent particles and thereby agglomerate with them, causing grit in the coating composition. The temperature should be below 49° C and preferably below 38° C during this mixing step so that the sizing agent does not precipitate out of solution upon addition of the cationic fixing agent. After allowing at least several minutes under dispersion for mixing to occur, the cationic fixing agent can be introduced.

Disperser speed is then increased to add sufficient shear to disperse the alumina pigment. The disperser can be of any of the normal dispersing blades such as Cowles or Gaulin. Alumina can be rapidly added to the coating as the pigment is readily dispersed.

After dispersing the alumina pigment for 10 minutes, the silica pigment is then added. The silica pigment should be added slowly into the vortex so it may be completely wetted out and dispersed before additional pigment is added. The disperser speed should be high enough to support a vortex into which the silica is added. Silica pigment added anywhere else but into the vortex will build-up on the tank wall and harden. It will not be properly dispersed. Both the cationic agent and silica pigment should be added at the indicated points of addition to avoid excessively high viscosities, incompatibilities, and grit formation.

After the silica pigment addition is complete, the remaining polyvinyl alcohol and any additives, e.g., a fluorescent whitening agent, are added. The coating is then mixed for an additional 10-20 minutes depending on volume. The coating composition is then ready for use.

The solids content of the preferred coating composition suspension should be above 30%, and preferably above 35% to achieve coat weights of at least 7 g/m² with conventional coating equipment. Desirably, the percent solids should be as high as possible to reduce the energy needed to dry the coating composition on the substrate. It has been found that above about 38% solids the coating composition of the invention is difficult to smoothly apply with conventional equipment. Solids contents of 35-38% provides desirable coat weights of about 10 g/m².

The ink jet recording medium provided by the present invention comprises a substrate with the coating composition of the invention applied thereto. The substrate may comprise a variety of types of paper webs or plastic substrates such as mylar. Paper webs may include groundwood-free sheets, groundwood sheets or a combination thereof. The basis weight of acceptable paper substrates may vary greatly, from very light Bible papers having basis weight of about 32 g/m² to heavy, specialty papers having basis weight of 450 g/m² or more. Paper substrates may be uncoated, size press coated, or precoated, and the paper may be machine-glazed or machine finished. Depending on the nature of the substrate, a precoating or other treatment may be useful to reduce porosity, or to provide a better bonding surface for the subsequent coating, or to better prevent migration of the subsequent coating into the web. Preferably, rosin or other sizing is added to achieve 40 or less g/m²/min Cobb sizing, to reduce penetration of liquid into the web. (Cobb size is a standard test to determine the amount of water absorbed during contact with the web and is measured in grams per square meter per minute.)

One or both sides of the paper web may be precoated with size solution to provide brightness and color and to provide sufficient holdout for the final coating. The precoating is applied in a conventional manner and may contain conventional pigments, binders and sizing agents. Preferably, the TAPPI brightness is 85 or greater, and the TAPPI "b" color is equal to or less than 2. If the subsequently applied ink-receiving coat will be applied to only one side of the web, a lightweight coating may also be applied to the other side of the web to minimize potential sheet curl.

The precoat may comprise conventional pigments such as clay, titanium dioxide, calcium carbonate and others well known to those skilled in the art. The binders may comprise starch, soy protein, latex and the like. A sizing agent may be employed such as rosin, starch and other known sizing agents. The base web is preferably sized at values less than 40 g/m²/min Cobb size, and the coat weight is in the order of about 3 to about 8 g/m².

A preferred substrate for cut size ink jet papers comprises a low ash base stock made square (having similar cross-direction "CD" and machine-direction "MD" physical properties), having a basis weight of between 74 - 119 g/m². The base stock is size coated with a light starch and pigment coating and dried prior to application of the ink receptive coating.

A preferred substrate suitable for ink jet label paper comprises machine glazed ("Yankee") 48 - 65 g/m² base stock with a wet strength resin in the base sheet to prevent cockle. The ink receptive coating is applied to the machine glazed side of the sheet. The back side of the sheet is coated with a pigment latex coating for curl control.

After the web has been dried, the ink receptive coating of the invention is applied over at least one side using a conventional coater, and then is dried. The desired coat weight is at least 7 g/m² and preferably 8 - 15 g/m². If the weight is significantly below 7 g/m², the resulting paper will exhibit less than desirable print quality and excessive ink penetration. After drying, the ink receptive coating layer will have a thickness of at least 8 µm and preferably from about 8 to about 12 µM. The pigments in the coating provide an absorptive capacity for the liquid component of the ink to be applied, and the thickness of the coating layer is correlated to the absorption rate and hence ink drying time.

Depending on resolution of the printer, the size of the dots to be printed ranges in the order of 75 to 160 µm. Ink jet printing of 394 to 472 dots per cm (1000 to 1200 dots per inch) when available, will require dots having a diameter of down to 40 µm or less. The present invention contemplates the use of various binders and sizing agents, depending on the resolution needed for a printer. The binder level and sizing agents contribute to the control of dot diameter and other properties.

In further illustration of the present invention, the following examples are presented. "Parts" in each example refer to bone dry parts by weight, except for the fluorescent whitening agent which is parts in liquid form as received from the supplier. For the purpose of the Examples, the below definitions are applicable:

### Mottle

HP Print: Non-uniformity of ink density in the solid print areas. Rating 1 to 3 with three having little or no mottle.

### Pigment Black Bleed

A general increase in printed line width.
HP ratings 1 to 3 with three being best and having little or no increase.
Epson: Okay or poor as observed.

### Cockle

The degree to which the sheet will deviate from its original shape upon printing or having oth applied to it.
Okay or poor as observed.

### Scratch resistance

The degree to which coating comes off the sheet when scratched with the fingernail.
Ratings 1 to 5 with five being best and there being no removal of coating.

### Tape Pull

A measure of the amount of coating which separates from the fiber and adheres to cellophane tape when
tape is pressed on then slowly pulled off at right angles to the sheet. Rating 1 to 5 with five being best and there is no removal of coating from the fibers.

### Dusting

The degree to which coating will come off the sheet when rubbed with the tip of the finger. Okay or poor as observed.

### Example 1

An 86 g/m² prime coated freesheet paper was used as the base sheet. The base sheet was coated using a conventional blade coater at a weight of 11.5 g/m² on the wire side. Two different compositions were made down at 36% solids; one with 5 parts of the preferred sizing agent and one with 10 parts:

| Bone Dry Parts | Materials |
|---|---|
| 30 | Airvol 805 low molecular weight, partially hydrolyzed polyvinyl |
| | alcohol polymer |
| 5, 10 | Chromaset 600 styrene acrylic dispersion sizing agent |
| 10 | Lectrapel cationic agent (polycationic quaternary ammonium) |
| 75 | Grace-Davison Syloid 620 silica gel |
| 25 | Martifin OL-107 alumina trihydrate |
| 10 | Airvol 805 polyvinyl alcohol |
| 2 | Tinopal HST fluorescent whitening agent |

The dried sheets were then tested, the results being:

### Qualitative Wire Side Analysis:

| Parts Sizing Agent: | | 5 | 10 |
|---|---|---|---|
| Coatweight (g/m²) | | 11.5 | 11.5 |
| Smoothness | | | |
| | PrintSurf | 8.29 | 8.30 |
| | Hagerty | 282 | 281 |
| Opticals | | | |
| | Brightness | 94.0 | 93.8 |
| | "b" | -2.2 | -2.2 |
| | FWA Contribution | 6.3 | 6.3 |
| Strength | | | |
| | Tape Pull | 4 | 3.5 |
| | Scratch | 4 | 5 |

| | | | |
|---|---|---|---|
| Coefficient of Friction | | | |
| | Static | 0.95 | 0.91 |
| | Kinetic | 0.68 | 0.66 |
| Epson Stylus Print Tests | | | |
| | Intensity | 8 | 8 |
| | Half-Tone Mottle | 7.5 | 7.5 |
| | Total | 15.5 | 15.5 |
| | Average Density | 1.58 | 1.54 |
| Hewlett Packard Print Tests | | | |
| | Ink Dry Time | 51 | 48 |
| | Mottle | 2.5 | 2.5 |
| | Pigment Black | 2.5 | 2.5 |

### Example 2

A 74 g/m² prime coated freesheet paper was used as the base sheet. The base sheet was coated using a conventional blade coater at a weight of 11.5 g/m² on the wire side. Two different compositions were made down at 36% solids; one with 2.5 parts of the preferred sizing agent and one with 5 parts:

| Bone Dry Parts | Materials |
|---|---|
| 30 | Airvol 805 low molecular weight, partially hydrolyzed polyvinyl alcohol polymer |
| 2.5/5 | Chromaset 600 styrene acrylic dispersion sizing agent |
| 10 | Lectrapel cationic agent (polycationic quaternary ammonium) |
| 75 | Grace-Davison Syloid 620 silica gel |
| 25 | Martifin OL-107 alumina trihydrate |
| 10 | Airvol 805 polyvinyl alcohol |
| 2 | Tinopal HST fluorescent whitening agent |

The dried sheets were then tested, the results being:

### Qualitative Wire Side Analysis:

| Parts Sizing Agent: | | 2.5 | 5 |
|---|---|---|---|
| Coatweight (g/m²) | | 11.5 | 11.5 |
| Smoothness | | | |
| | PrintSurf | 8.25 | 8.28 |
| | Hagerty | 293 | 299 |
| Opticals | | | |
| | Brightness | 93.0 | 93.2 |
| | "b" | -2.8 | -2.9 |
| | FWA Contribution | 5.9 | 6.1 |
| Strength | | | |
| | Tape Pull | 2.5 | 2.7 |
| | Scratch | 4.2 | 4.2 |
| Coefficient of Friction | | | |
| | Static | 0.74 | 0.76 |
| | Kinetic | 0.38 | 0.45 |
| Epson Stylus Print Tests | | | |
| | Intensity | 8 | 8 |
| | Half Tone Mottle | 8 | 8 |
| | Total | 16 | 16 |
| | Average Density | 1.60 | 1.60 |
| Hewlett Packard Print Tests | | | |
| | Ink Dry Time | 25 | 32 |
| | Mottle | 3 | 3 |
| | Pigment Black | 1.5 | 2 |

### Example 3

A 74 g/m² prime coated freesheet paper was used as the base sheet. The base sheet was coated using a conventional blade coater at a weight of 11.5 g/m² on the wire side. Two different compositions were made down at 36% solids; one with 2.5 parts of an alternate sizing agent and one with 5 parts:

| Bone Dry Parts | Materials |
|---|---|
| 30 | Airvol 805 low molecular weight, partially hydrolyzed polyvinyl alcohol polymer |
| 2.5, 5 | UniQ-Print 8000 styrene acrylic dispersion sizing agent |
| 10 | Lectrapel cationic agent (polycationic quaternary ammonium) |
| 75 | Grace-Davison Syloid 620 silica gel |
| 25 | Martifin OL-107 alumina trihydrate |
| 10 | Airvol 805 polyvinyl alcohol |
| 2 | Tinopal HST fluorescent whitening agent |

The dried sheets were then tested, the results being:

### Qualitative Wire Side Analysis:

| Parts Sizing Agent: | | 2.5 | 5 |
|---|---|---|---|
| Coatweight (g/m²) | | 11.5 | 11.5 |
| Smoothness | | | |
| | PrintSurf | 8.25 | 8.26 |
| | Hagerty | 294 | 297 |
| Opticals | | | |
| | Brightness | 93.2 | 93.4 |
| | "b" | -2.9 | -3.1 |
| | FWA Contribution | 6.0 | 6.4 |
| Strength | | | |
| | Tape Pull | 2.2 | 2.5 |
| | Scratch | 4 | 4 |
| Coefficient of Friction | | | |
| | Static | 0.76 | 0.83 |
| | Kinetic | 0.39 | 0.46 |
| Epson Stylus Print Tests | | | |
| | Intensity | 8 | 8 |
| | Half-Tone Mottle | 9 | 8 |
| | Total | 17 | 16 |
| | Average Density | 1.60 | 1.60 |
| Hewlett Packard Print Tests | | | |
| | Ink Dry Time | 32 | 42 |
| | Mottle | 3 | 3 |
| | Pigment Black | 1.5 | 2.5 |

### Example 4

An 86 g/m² prime coated freesheet paper was used as the base sheet. The base sheet was coated using a conventional blade coater at a weight of 11.5 g/m² on the wire side. Two different compositions were made down at 36% solids; one with 5 parts of an alternate sizing agent and one with 10 parts:

| Bone Dry Parts | Materials |
|---|---|
| 30 | Airvol 805 low molecular weight, partially hydrolyzed polyvinyl alcohol polymer |
| 5/10 | UniQ-Print 8000 styrene acrylic dispersion sizing agent |
| 10 | Lectrapel cationic agent (polycationic quaternary ammonium) |
| 75 | Grace-Davison Syloid 620 silica gel |
| 25 | Martifin OL-107 alumina trihydrate |
| 10 | Airvol 805 polyvinyl alcohol |
| 2 | Tinopal HST fluorescent whitening agent |

The dried sheets were then tested, the results being:

### Qualitative Wire Side Analysis:

| Parts Sizing Agent: | | 5 | 10 |
|---|---|---|---|
| Coatweight (g/m²) | | 11.5 5 | 11.5 |
| Smoothness | | | |
| | PrintSurf | 8.30 | 8.27 |
| | Hagerty | 268 | 277 |
| Opticals | | | |
| | Brightness | 93.8 | 94.3 |
| | "b" | -2.2 | -2.5 |
| | FWA Contribution | 6.3 | 6.4 |
| Strength | | | |
| | Tape Pull | 5 | 5 |
| | Scratch | 5 | 4.5 |
| Coefficient of Friction | | | |
| | Static | 0.92 | 0.94 |
| | Kinetic | 0.68 | 0.67 |
| Epson Stylus Print Tests | | | |
| | Intensity | 8 | 8 |
| | Half-Tone Mottle | 7.5 | 7.5 |
| | Total | 15.5 | 15.5 |
| | Average Density | 1.56 | 1.56 |
| Hewlett Packard Print Tests | | | |
| | Ink Dry Time | 49 | 70 |
| | Mottle | 2.5 | 2 |
| | Pigment Black | 2.5 | 3 |

### Example 5

Tests were conducted to evaluate the performance of the ink jet coating composition of the invention on machine glazed paper. In one case, an ink jet receptor coating made in accordance with the invention was applied to the machine glazed side of the sheet and a curl control coating was applied to the back side. In a second case, the ink jet coating was applied to the back side and the curl control coating was applied to the machine glazed side. In both cases a 55 g/m² uncoated, machine glazed, freesheet paper with internal wet strength was used as the base sheet. The ink jet receptor coating as specified below was applied with a conventioal blade coater at a rate of 10.5 g/m² and curl control coating was applied at 6.5 g/m². The solids content of both coatings was 35-36%.

### Ink Jet Coating

| Bone Dry Parts | Materials |
|---|---|
| 30 | Airvol 805 low molecular weight, partially hydrolyzed polyvinyl alcohol |
| 5 | Chromaset 600 styrene acrylic sizing agent |
| 10 | Lectrapel cationic agent (polycationic quaternary ammonium) |
| 75 | Grace-Davison Sylojet 612 silica gel |
| 25 | Martifin OL-107 alumina trihydrate |
| 10 | Airvol 805 low molecular weight, partially hydrolyzed polyvinyl alcohol |
| 2 | Tinopal HST fluorescent whitening agent |

### Curl Control Coating

| Bone Dry Parts | Materials |
|---|---|
| 100 | Minerals & Chemicals' Ultra Cote No. 2 high brightness clay |
| 16 | Dow 8879 styrene butadiene latex |
| 3 | Airvol 805 polyvinyl alcohol |
| 0.3 | NH₄OH |
| 0.37 | BASF Sterocoll FG acrylic thickening agent |
| 2 | Tinopal HST whitening agent |

The dried sheets were then tested, the results being:

| | | MG | BS |
|---|---|---|---|
| Opticals | | | |
| | Brightness | 92.6 | 92.5 |
| | | | |
| Dust Tests | | | |
| | Rating | 2.5 | 3.5 |
| | Density (change) | 0.23 | 0.14 |
| | | | |
| Epson 800 Print Tests | | | |
| | Intensity | 7.5 | 7.5 |
| | Half-Tone Mottle | 7.5 | 7 |
| | Total | 15 | 14.5 |
| | Ave Density | 1.55 | 1.53 |
| | | | |
| HP Print Tests | | | |
| | Drytime (s) | 10 | 0 |
| | 4-Color Mottle | 2 + | 2 + |
| | Pigment Black | 1.5 | 1.5 |

The ink jet coating applied to the machine glazed side had significantly less print mottle, and thus better print quality, than when applied to the back side. Ink jet prints on these samples did not run or distort when splashed with water. This is a distinct advantage over prior art ink jet grades used in non-outdoor applications.

## Claims

1. A method of making a coating composition for an ink jet medium comprising mixing water, one or more pigments of which at least 50% comprises non-agglomerated, absorptive silica, 10-50 parts dry weight per 100 parts pigment of low molecular weight, partially hydrolyzed polyvinyl alcohol binder, 1-10 parts of styrene acrylic sizing agent, 2-20 parts dry weight per 100 parts pigment of cationic fixing agent, the coating composition having a pH in the range 4.0 to 7.5, a solids content of above 30% wherein at least a portion of the polyvinyl alcohol is mixed with the sizing agent prior to the addition of the cationic fixing agent, and wherein the polyvinyl alcohol is at a temperature less than 49°C to ensure that the sizing agent does not react with the cationic fixing agent and subsequently precipitate out of solution.

2. A method for making a coating composition as in claim 1 wherein the composition has a pH in the range of 4.5 - 5.5.

3. A method for making a coating composition as in claim 1 wherein the coating composition has a solids content in the range of 35-38%.

4. A method for making a coating composition as in claim 1 wherein said cationic fixing agent comprises a polycationic quaternary ammonium polymer.

5. A method for making an ink jet recording medium comprising the steps of:
preparing a coating composition in accordance with the method of claim 1
applying the coating composition to at least one side of a substrate in an amount to result in a finished coat weight of 7-15 gm/m²; and
drying said coating to form the ink jet recording medium.

6. A method for making an ink jet recording medium as in claim 5 wherein the step of applying the coating composition comprises applying the coating composition to a front side of the substrate, and further comprises applying an anticurl coating to a back side of the substrate.

7. An aqueous coating composition for an ink jet recording sheet, comprising:
a) one or more pigments comprised of at least 50% by weight of non-agglomerated absorptive silica gel with primary pore volume of between 0,5 and 2,0 cm³/g,
b) polyvinyl alcohol binder comprising between 30% - 50% by weight of said pigment,
c) a sizing agent compromising by weigth 1%-10% of said pigment weight,
d) a cationic fixing agent comprising between 4-10% by weight of said pigment,
e) the pH value of the composition being between 4 and 7,0 and
f) the composition having a solids content greater than 30%.

8. An aqueous coating composition for an ink jet recording sheet, comprising:
a) an absorptive pigment comprised of up to 25% by weight of alumina and at least 75% of non-agglomerated absorptive silica gel with primary pore volume of between 0,5 and 2,0 cm³/g,
b) a polyvinyl alcohol binder comprising between 30% - 50% by weight of said pigment,
c) a styrene acrylic sizing agent comprising between 1% - 10% by weight of said pigment,
d) a cationic fixing agent comprising between 4% - 10% by weight of said pigment,
e) the pH value of the composition being between 4,5 and 5,5 and
f) the composition having a solids content of between 35% and 38% by weight.

## Patentansprüche

1. Verfahren zur Herstellung einer Beschichtungszusammensetzung für ein Tintenstrahlmedium enthaltend das Mischen von Wasser, einem oder mehr Pigmente, von denen wenigstens 50 % nicht-agglomeriertes, absorptionsfähiges Siliciumdioxyd enthält, 10 bis 50 Trockengewichtsteile pro 100 Teile Pigment von niedrig-Molekulargewicht, teilweise hydrolisiertem Polyvinylalkoholbinder, 1 bis 10 Teile von Styrolacrylschlichtmittel, 2 bis 20 Trockengewichtsteile pro 100 Teile Pigment von kationischem Fixiermittel, wobei die Beschichtungszusammensetzung einen pH-Wert in dem Bereich 4.0 bis 7.0 hat, einen Feststoffgehalt von über 30%, wobei wenigstens ein Teil des Polyvinylalkohols mit dem Schlichtmittel vor der Zugabe des kationischen Fixiermittels gemischt wird, und wobei der Polyvinylalkohol bei einer Temperatur unter 49°C ist, um sicher zu stellen, dass das Schlichtmittel nicht mit dem kationischen Fixiermittel reagiert und anschließend aus der Lösung ausfällt.

2. Verfahren zur Herstellung einer Beschichtungszusammensetzung nach Anspruch 1, wobei die Zusammensetzung einen pH-Wert in dem Bereich von 4,4 bis 5,5 hat.

3. Verfahren zur Herstellung einer Beschichtungszusammensetzung nach Anspruch 1, wobei die Beschichtungszusammensetzung einen Feststoffgehalt in dem Bereich von 35 bis 38% hat.

4. Verfahren zur Herstellung einer Beschichtungszusammensetzung nach Anspruch 1, wobei das kationische Fixiermittel ein polykationisches quartäres Ammoniumpolymer enthält.

5. Verfahren zur Herstellung eines Tintenstrahlaufzeichnungsmediums, enthaltend die Schritte:
- Vorbereiten einer Beschichtungszusammensetzung gemäß dem Verfahren nach Anspruch 1,
- Aufbringen der Beschichtungszusammensetzung auf wenigstens eine Seite eines Substrats in einer Menge, die in einem fertiggestellten Beschichtungsgewicht von 7 bis 15 gm/m² resultiert, und
- Trocknen der Beschichtung, um das Tintenstrahlaufzeichnungsmedium zu bilden.

6. Verfahren zur Herstellung eines Tintenstrahlaufzeichnungsmediums nach Anspruch 5, wobei der Schritt des Aufbringens der Beschichtungszusammensetzung enthält: Aufbringen der Beschichtungszusammensetzung auf eine Frontseite des Substrats und ferner das Aufbringen einer Anti-Krümmungsbeschichtung auf eine Rückseite des Substrats.

7. Wässrige Beschichtungszusammensetzung für ein Tintenstrahlaufzeichnungsbogen, enthaltend:
a) ein oder mehr Pigmente, enthaltend wenigstens 50 Gew.-% von nicht-agglomeriertem, absorptionsfähigem Silikagel mit einem Primärporenvolumen zwischen 0,5 und 2,5 cm³/g,
b) Polyvinylalkoholbinder, zwischen 30 und 50 Gew.-% des Pigments,
c) ein Schlichtmittel, 1 bis 10 Gew.-% des Pigmentgewichtes,
d) ein kationisches Fixierelement, zwischen 4 bis 10 Gew.-% des Pigments,
e) wobei der pH-Wert der Zusammensetzung zwischen 4 und 7.0 liegt und
f) die Zusammensetzung einen Feststoffgehalt über 30% hat.

8. Wässrige Beschichtungszusammensetzung für einen Tintenstrahlaufzeichnungsbogen, enthaltend:
a) ein absorptionsfähiges Pigment aus bis zu 25 Gew.-% Aluminiumoxid und wenigstens 75 % nicht-agglomeriertem, absorptionsfähiges Silikagel mit einem Primärporenvolumen von 0,5 bis 2,0 cm³/g,
b) einen Polyvinylalkoholbinder mit 30 bis 50 Gew.-% des Pigments,
c) ein Styrolacrylschlichtmittel mit 1 bis 10 Gew.-% des Pigments,
d) ein kationisches Fixierelement mit 4 bis 10 Gew.-% des Pigments,
e) wobei der pH-Wert der Zusammensetzung zwischen 4,5 und 5,5 liegt und
f) die Zusammensetzung einen Feststoffgehalt von 35 bis 38 Gew.-% hat.

## Revendications

1. Procédé de fabrication d'une composition de revêtement pour un support à jet d'encre comprenant les étapes consistant à mélanger de l'eau, un ou plusieurs pigments dont au moins 50 % comprennent une silice absorbante non agglomérée, 10 à 50 parties en poids sec, pour 100 parties en poids de pigment, de liant à base de poly(alcool vinylique) partiellement hydrolysé de faible masse moléculaire, 1 à 10 parties en poids d'un agent d'encollage styrène acrylique, 2 à 20 parties en poids sec pour 100 parties de pigment, d'agent de fixation cationique, la composition de revêtement présentant un pH dans la gamme de 4,0 à 7,5, une teneur en solides supérieure à 30 % dans lequel au moins une portion du poly(alcool vinylique) est mélangée avec l'agent d'encollage avant l'ajout de l'agent de fixation cationique, et dans lequel le poly(alcool vinylique) est à une température inférieure à 49 °C pour garantir que l'agent d'encollage ne réagisse pas avec l'agent de fixation cationique et ne précipite pas par la suite de la solution.

2. Procédé de fabrication d'une composition de revêtement selon la revendication 1, dans lequel la composition présente un pH dans la gamme de 4,5 à 5,5.

3. Procédé de fabrication d'une composition de revêtement selon la revendication 1, dans lequel la composition de revêtement a une teneur en solides dans la gamme de 35 à 38 %.

4. Procédé de fabrication d'une composition de revêtement selon la revendication 1, dans lequel ledit agent de fixation cationique comprend un polymère d'ammonium quaternaire polycationique.

5. Procédé de fabrication d'un support d'enregistrement à jet d'encre comprenant les étapes consistant à :
préparer une composition de revêtement selon le procédé de la revendication 1
appliquer la composition de revêtement à au moins un côté d'un substrat en une quantité pour obtenir un poids de revêtement fini de 7 à 15 g/m² ; et
sécher ledit revêtement pour former le support d'enregistrement à jet d'encre.

6. Procédé de fabrication d'un support d'enregistrement à jet d'encre selon la revendication 5, dans lequel l'étape consistant à appliquer la composition de revêtement comprend l'application de la composition de revêtement à un côté avant du substrat, et comprend en outre l'application d'un revêtement antigondolage au côté arrière du substrat.

7. Composition aqueuse de revêtement pour une feuille d'enregistrement à jet d'encre, comprenant :
a) un ou plusieurs pigments composés d'au moins 50 % en poids d'un gel de silice absorbant non aggloméré avec un volume de pore principal compris entre 0,5 et 2,0 cm³/g,
b) un liant de poly(alcool vinylique) comprenant entre 30 et 50 % en poids dudit pigment,
c) un agent d'encollage composant en poids 1 % à 10 % dudit poids du pigment,
d) un agent de fixation cationique comprenant entre 4 et 10 % en poids dudit pigment,
e) la valeur de pH de la composition étant comprise entre 4 et 7,0 et
f) la composition ayant une teneur en solides supérieure à 30 %.

8. Composition aqueuse de revêtement pour une feuille d'enregistrement à jet d'encre, comprenant :
a) un pigment absorbant composé jusqu'à 25 % en poids d'alumine et au moins 75 % d'un gel de silice absorbante non agglomérée dont le volume de pore principal est compris entre 0,5 et 2,0 cm³/g,
b) un liant de poly(alcool vinylique) comprenant entre 30 % et 50 % en poids dudit pigment,
c) un agent d'encollage styrène acrylique composant entre 1 % et 10 % en poids dudit pigment,
d) un agent de fixation cationique comprenant entre 4 % et 10 % en poids dudit pigment,
e) la valeur de pH de la composition étant comprise entre 4,5 et 5,5 et
f) la composition ayant une teneur en solides comprise entre 35 % et 38 % en poids.
